(19)

Europäisches
Patentamt
European
Patent Office
Office européen
des brevets

(11) **EP 2 044 392 B1**

(12) **EUROPÄISCHE PATENTSCHRIFT**

(45) Veröffentlichungstag und Bekanntmachung des
Hinweises auf die Patenterteilung:
**08.05.2019 Patentblatt 2019/19**

(51) Int Cl.:
**G01F 1/32** *(2006.01)* **G01F 1/86** *(2006.01)*
**G01F 1/88** *(2006.01)* **G01F 15/00** *(2006.01)*
**G01F 15/18** *(2006.01)*

(21) Anmeldenummer: **07787726.4**

(22) Anmeldetag: **19.07.2007**

(86) Internationale Anmeldenummer:
**PCT/EP2007/057468**

(87) Internationale Veröffentlichungsnummer:
**WO 2008/009720 (24.01.2008 Gazette 2008/04)**

(54) **MESSSYSTEM FÜR EIN IN EINER PROZEßLEITUNG STRÖMENDES MEDIUM**

MEASURING SYSTEM FOR A MEDIUM FLOWING IN A PROCESS LINE

SYSTÈME DE MESURE POUR UN MILIEU S'ÉCOULANT DANS UN CONDUIT DE TRAITEMENT

(84) Benannte Vertragsstaaten:
**AT BE BG CH CY CZ DE DK EE ES FI FR GB GR
HU IE IS IT LI LT LU LV MC MT NL PL PT RO SE
SI SK TR**

(30) Priorität: **21.07.2006 DE 102006034296
06.10.2006 DE 102006047815**

(43) Veröffentlichungstag der Anmeldung:
**08.04.2009 Patentblatt 2009/15**

(73) Patentinhaber: **Endress + Hauser Flowtec AG
4153 Reinach (CH)**

(72) Erfinder: **HÖCKER, Rainer
79761 Waldshut (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**DE-A1- 4 013 351 DE-A1- 19 852 015
DE-A1- 19 957 437 DE-B3- 10 327 934
GB-A- 2 402 971 US-A- 3 686 946
US-A1- 2002 043 103 US-A1- 2004 173 030**

**Beschreibung**

Die Erfindung betrifft ein Meßsystem zum Messen wenigstens einer Meßgröße, insb. eines Massedurchflusses, einer Dichte, einer Viskosität, eines Drucks oder dergleichen, eines in einer Prozeßleitung strömenden Mediums mit einem Meßaufnehmer sowie einem zwischen diesem und der Prozeßleitung vermittelnden Strömungskonditionierer.

In der industriellen Prozeß-Meßtechnik werden, insb. auch im Zusammenhang mit der Automatisierung chemischer oder verfahrenstechnischer Prozesse, zur Erfassung von prozeßbeschreibenden Meßgrößen und zur Erzeugung von diese repräsentierenden Meßwertsignalen prozeßnah installierte Meßsysteme verwendet, die jeweils direkt an oder in einer von Medium durchströmten Prozeßleitung angebracht sind. Bei den jeweils zu erfassenden Meßgrößen kann es sich beispielsweise um einen Massendurchfluß, einen Volumendurchfluß, eine Strömungsgeschwindigkeit, eine Dichte, eine Viskosität oder eine Temperatur oder dergleichen, eines flüssigen, pulver-, dampf- oder gasförmigen Prozeß-Mediums handeln, das in einer solchen, beispielsweise als Rohrleitung ausgebildeten, Prozeßleitung geführt bzw. vorgehalten wird.

Bei den Meßsystemen handelt es sich u.a. um solche, bei denen In-Line-Meßgeräte mit magnetisch-induktiven Meßaufnehmern oder die Laufzeit von in Strömungsrichtung ausgesendeten Ultraschallwellen auswertende, insb. auch nach dem Doppler-Prinzip arbeitende, Meßaufnehmern, mit Meßaufnehmern vom Vibrationstyp, insb. Coriolis-Massedurchflußaufnehmer, Dichteaufnehmer, oder dergleichen verwendet werden. Der prinzipielle Aufbau und die Funktionsweise von magnetisch-induktiven Meßaufnehmer ist z.B. in der EP-A 1 039 269, US-A 60 31 740, US-A 55 40 103, US-A 53 51 554, US-A 45 63 904 oder solcher Ultraschall-Meßaufnehmer z.B. in der US-B 63 97 683, der US-B 63 30 831, der US-B 62 93 156, der US-B 61 89 389, der US-A 55 31 124, der US-A 54 63 905, der US-A 51 31 279, der US-A 47 87 252 hinlänglich beschrieben und überdies dem Fachmann ebenfalls hinreichend bekannt sind, kann an dieser Stelle auf eine detailliertere Erläuterung dieser Meßprinzipien verzichtet werden. Weiterführende Beispiele für derartige, dem Fachmann an und für sich bekannte, insb. mittels kompakter In-line-Meßgeräte gebildet, Meßsysteme sind zudem u.a. in der EP-A 984 248, GB-A 21 42 725, US-A 36 86 946, US-A 43 08 754, US-A 44 20 983, US-A 44 68 971, US-A 45 24 610, US-A 47 16 770, US-A 47 68 384, US-A 50 52 229, US-A 50 52 230, US-A 51 31 279, US-A 52 31 884, US-A 53 59 881, US-A 54 58 005, US-A 54 69 748, US-A 56 87 100, US-A 57 96 011, US-A 58 08 209, US-A 60 03 384, US-A 60 53 054, US-A 60 06 609, US-B 63 52 000, US-B 63 97 683, US-B 65 13 393, US-B 66 44 132, US-B 66 51 513, US-B 68 80 410, US-B 69 10 387, US-A 2005/0092101, WO-A 88/02 476, WO-A 88/02 853, WO-A 95/16 897, WO-A 00/36 379, WO-A 00/14 485, WO-A 01/02816 oder WO-A 02/086 426 detailliert beschrieben.

Zum Erfassen der jeweiligen Meßgrößen weisen Meßsysteme der in Rede stehenden Art jeweils einen entsprechenden Meßaufnehmer auf, der in den Verlauf einer Medium führenden Prozeßleitung eingesetzt ist und der dazu dient, wenigstens ein die primär erfaßte Meßgröße möglichst genau repräsentierendes, insb. elektrisches, Meßsignal zu erzeugen. Dafür ist der Meßaufnehmer üblicherweise mit einem in den Verlauf der jeweiligen Prozeßleitung, dem

Führen von strömendem Medium dienenden Meßrohr sowie eine entsprechende physikalischelektrische Sensoranordnung ausgestattet. Diese wiederum weist wenigstens ein primär auf die zu erfassende Meßgröße oder auch Änderungen derselben reagierenden Sensorelement auf, mittels dem im Betrieb wenigstens ein von der Meßgröße entsprechend beeinflußtes Meßsignal erzeugt wird. Zur Weiterverarbeitung oder Auswertung des wenigstens einen Meßsignals ist der Meßaufnehmer ferner mit einer dafür entsprechend geeigneten Meßelektronik verbunden. Die mit dem Meßaufnehmer in geeigneter Weise kommunizierende Meßelektronik erzeugt im betrieb des Meßsystems unter Verwendung des wenigstens einen Meßsignals zumindest zeitweise wenigstens einen die Meßgröße momentan repräsentierenden Meßwert, beispielsweise also einen Massendurchfluß-Meßwert, Volumendurchfluß-Meßwert, einen Dichte-Meßwert, einen Viskositäts-Meßwert, einen Druck-Meßwert, einen Temperatur-Meßwert oder dergleichen.

Zur Aufnahme der Meßelektronik umfassen solche Meßsysteme ferner ein entsprechendes Elektronik-Gehäuse, das, wie z.B. in der US-A 63 97 683 oder der WO-A 00/36 379 vorgeschlagen, vom Meßaufnehmer entfernt angeordnet und mit diesem nur über eine flexible Leitung verbunden sein kann: Alternativ dazu kann das Elektronik-Gehäuse aber auch, wie z.B. auch in der EP-A 903 651 oder der EP-A 1 008 836 gezeigt, unter Bildung eines kompakten In-Line-Meßgeräts - beispielsweise eines Coriolis-Massedurchfluß-/Dichte-Meßgeräts, eines Ultraschall-Durchflußmeßgeräts, eines Vortex-Durchflußmeßgeräts, eines thermischen Durchflußmeßgeräts, eines Magnetisch-induktiven Durchflußmeßgerät oder dergleichen - direkt am Meßaufnehmer oder einem den Meßaufnehmer separat einhausenden Meßaufnehmer-Gehäuse angeordnet sein. In letzterem Fall dient das Elektronik-Gehäuse, wie beispielsweise in der EP-A 984 248, der US-A 47 16 770 oder der US-A 63 52 000 gezeigt, oftmals auch dazu, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Meßsysteme der beschriebenen Art sind darüber hinaus üblicherweise über ein an die Meßelektronik angeschlossenes Datenübertragungs-System miteinander und/oder mit entsprechenden Prozeß-Leitrechnern verbunden, wohin sie die Meßwertsignale z.B. via (4 mA bis 20 mA)-Stromschleife und/oder via digitalen Daten-Bus senden. Als Datenübertragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßwertsignale weiterverarbeitet und als entsprechende Meßergebnisse z.B. auf Monitoren visualisiert und/oder in Steuersignale für Prozeß-Stellglieder, wie z.B. Magnet-Ventile, Elektro-Motoren etc., umgewandelt werden.

Wie u.a. auch in der GB-A 21 42 725, US-A 58 08 209, US-A 2005/0092101, US-B 68 80 410, US-B 66 44 132, US-A 60 53 054, US-B 66 44 132, US-A 50 52 229 oder der US-B 65 13 393 diskutiert, können In-Line-Meßgeräte und insoweit auch Meßsystem der beschriebenen Art durchaus eine von der Art der Strömung mehr oder minder abhängige Meßgenauigkeit aufweisen. Von besonderem Interesse ist in diesem Zusammenhang auch eine momentane Ausprägung eines im Meßrohr wirksamen Strömungsprofils. In Anbetracht dessen, daß turbulente Strömungen, also Strömungen mit einer Reynoldszahl von größer 2300, über einen weiten Reynoldszahlbereich hinweg zueinander weitgehend ähnlich sind und insoweit auch einen vergleichbaren Einfluß auf die Meßgenauigkeit haben, wird bei vielen Meßsystemen oftmals eine hohe Strömungsgeschwindigkeit für das zu messende Medium angestrebt. Vortex-Durchflußmeßgeräte sind zur Erzielung einer ausreichend hohen Meßgenauigkeit zumeist sogar auf solche Strömungen angewiesen, die eine Reynoldszahl von weit über 4000 aufweisen.

Daher ist es bei Meßsystemen der in Rede stehenden Art durchaus üblich, zumindest bei Prozeßleitungen mit einem vergleichsweise großen Kaliber und/oder in Anwendungen mit vergleichsweise langsam strömenden Medien, das Meßrohr gegebenenfalls so auszubilden, daß es einen kleineren Strömungsquerschnitt aufweist, als ein einlaßseitig an das Meßsystem angeschlossenes Zulaufsegment der Prozeßleitung. Infolge dessen erfährt das strömende Medium dann eine Beschleunigung in Strömungsrichtung, wodurch wiederum auch eine Erhöhung der Reynoldszahl erzielt werden kann. Die Realisierung dieses Prinzips hat sich im besonderen auch bei solchen Meßsystemen bewährt, die mittels eines Ultraschall-Meßgeräts und/oder mittels eines Vortex-Durchflußmeßgeräts arbeiten und/oder die für die Messung von zumindest anteilig, insb. überwiegend oder vollständig, gasförmigen Medien vorgesehen sind.

Im Hinblick auch darauf, daß beispielsweise der das Meßprinzip von Vortex-Durchflußmeßgeräten begründende Zusammenhang zwischen einer Ablöserate von Wirbeln an einem der Strömung entgegenstehenden Staukörper und der damit primär zu erfassenden Meßgröße Volumendurchfluß oder Strömungsgeschwindigkeit erst oberhalb einer Reynoldszahl von 20000 in ausreichendem Maße als linear angesehen werden kann, ist gegebenenfalls ein vergleichsweise großer Unterschied zwischen den Strömungsquerschnitten von der Prozeßleitung und Meßrohr zu realisieren.

Um über eine möglichst kurze Wegstrecke einen möglichst definierten Übergangsbereich vom Zulaufsegment hin zum Meßrohr mit kleinerem Strömungsquerschnitt zu schaffen ist es, wie u.a. auch in der GB-A 21 42 725, der US-A 36 86 946, der US-A 58 08 209 oder der US-A 2005/0092101 vorgeschlagen, üblich im Meßsystem einen entsprechenden Strömungskonditionierer mit einem sich zum Meßrohr hin verjüngenden, im Betrieb vom Medium durchströmten Lumen vorzusehen, der einlaßseitig des Meßrohrs angeordnet ist und somit zwischen diesem und dem Zulaufsegment der Prozeßleitung vermittelnd wirkt. Ein dem Zulaufsegment der Prozeßleitung zugewandtes Einlaßende des Strömungskonditionierers weist dabei einen Strömungsquerschnitt auf, der größer als der Strömungsquerschnitt des Meßrohrs ist, während ein dem Meßrohr zugewandtes Auslaßende des Strömungskonditionierers dementsprechend einen Strömungsquerschnitt aufweist, der kleiner als der Strömungsquerschnitt des Einlaßendes ist. Besonders in der US-A 58 08 209 wie auch in der US-A 2005/0092101 wird im Zusammenhang mit den jeweils vorgeschlagenen Strömungskonditionierern ferner darauf hingewiesen, daß der damit realisierte Übergang zwischen den beiden verschieden großen Strömungsquerschnitten stetig und von Störstellen, wie beispielsweise Wirbel verursachende Kanten, absolut frei gehalten sein muß. Dies kann durch vergleichsweise aufwendige Bearbeitung der Oberflächen des Strömungskonditioners wie auch der allfällig im Einlaufbereich des Meßsystems vorhanden Fügestellen durchaus in zufrieden stellendem Maße gewährleistet werden.

Allerdings hat es sich gezeigt, daß trotz der Verwendung von Strömungskonditionierern der vorgenannten Art bereits geringfügige Störungen der Strömung im Einlaufbereich des Meßsystems, insb. auch in dem dem eigentlichen Meßsystem vorgelagerten Zulaufsegment der angeschlossenen Prozeßleitung oder im Bereich des gegebenenfalls zur Verbindung von Zulaufsegment und Meßsystem dienenden einlaßseitigen Anschlußflansches, eine erhebliche Variation der Strömungsverhältnisse innerhalb des Meßrohrlumens und damit einhergehend eine entsprechende Verschlechterung der Meßgenauigkeit zu verzeichnen sind.

Eine Möglichkeit zur Behebung dieses Problems besteht vordergründig darin, eine entsprechende Bearbeitung auch des Einlaufbereichs des Meßsystems, also des Zulaufsegments der Prozeßleitung oder der einlaßseitigen Flanschverbindung vorzunehmen. Praktisch ist dies jedoch eher kaum durchführbar, jedenfalls aber dem Anwender des Meßsystems nicht ohne weiters zuzumuten. Dies im besonderen auch deshalb, weil die Wahl für das Meßsystem durchaus auch dadurch bedingt sein kann, daß in einer bestehenden Anlange ein zuvor installiertes, hinsichtlich der tatsächlichen Strömungsverhältnisse jedoch möglicherweise überdimensioniertes Meßsystem ad hoc ausgetauscht werden soll. Insoweit ist also die tatsächliche Einbausituation für das Meßsystem nicht nur als nicht vorhersehbar, sondern auch als praktisch nicht adaptierbar und insoweit auch als nicht kontrollierbar anzusehen.

Eine weitere Möglichkeit zu Umgehung dieses Problems besteht ferner darin, die Einbaulänge des Strömungskonditionierers zu vergrößern, um so bereits im Strömungskonditionierer eine weitgehende insoweit eine Stabilisierung und Beruhigung der Strömung, möglichst also vor deren Eintritt in das Meßrohr zu erzielen. Allerdings bedingt dies, wie u.a. auch aus der erwähnten US-A 36 86 946 ersichtlich, ein entsprechend kurzes Meßrohr einhergehend mit einer Positionierung der Sensorelemente des Meßaufnehmers unmittelbar am Einlaßende des Meßrohrs bzw. in dessen Nähe, oder kann dies zu einer beträchtlichen Erhöhung der Einbaulänge des gesamten Meßsystems führen. Im Hinblick auf die oben erwähnte Situation, bei der ein bestehendes herkömmliches Meßsystem durch ein solches mit vorgeschaltetem Strömungskonditionierer ersetzt werden soll, ist die Einbaulänge für das Meßsystem mehr oder minder fest vorgegeben und somit auch einer Erhöhung der Einbaulänge des Strömungskonditionierers nur in diesem eher begrenzten Maße möglich. Angesichts der Nachteile von herkömmlichen Strömungskonditionierern kann es nicht verwundern, daß die Anwendungsbreite von Meßsystemen der in Rede Art nach wie vor als eher beschränkt anzusehen ist.

Eine Aufgabe der Erfindung besteht daher darin, ein Meßsystem für ein strömendes Medium zu schaffen, das bei möglichst kurze Einbaulänge eine Erhöhung der Reynoldszahl der Strömung von der Prozeßleitung hin zum Meßrohr ermöglicht und das trotzdem eine gegenüber allfälligen Störungen im strömenden Medium stromaufwärts des Meßsystems, sei es im Zulaufsegment und/oder im unmittelbaren Übergangsbereich zwischen Prozeßleitung und eigentlichem Meßsystem, weitgehend unempfindliche Meßgenauigkeit aufweist.

Zur Lösung der Aufgabe besteht die Erfindung in einer Prozeßleitung, insb. einer Rohrleitung, gemäß Anspruch 1.

Ein Grundgedanke der Erfindung besteht darin, die Meßgenauigkeit von Meßsystemen der beschriebnen Art nicht nur dadurch zu verbessern, daß die Strömung ausreichend beschleunigt und somit sicher in einen günstigen Reynoldszahlbereich transformiert wird, sondern auch dadurch, daß einerseits allfällig stromaufwärts des Meßsystems in die Strömung eingetragene Störungen, wie z.B. in deren rohrwandnahen Randbereichen "mitschwimmende" Wirbel, mittels des dem eigentlichen Meßaufnehmer vorgeschalteten Strömungskonditionierers weitgehend zu eliminieren und somit anderseits mittels des Strömungskonditionierers ein weitgehend störunempfindliches, für das Meßprinzip ausreichend gut reproduzierbares Strömungsprofil für das in den Meßaufnehmer einströmende Medium einzustellen.

Dies erfolgt bei dem erfindungsgemäßen Meßsystem im besonderen dadurch, daß in dessen Einlaufbereich wenigstens ein im wesentlichen toroidaler Wirbel erzeugt wird, der zumindest in einem stationären Zustand weitgehend ortsfest gehalten ist. Dieser stationäre Wirbel wirkt für das vorbeiströmenden Medium praktisch als eine zusätzliche Querschnittsverengung und insoweit effektiv als eine "virtuelle" Düse, die innerhalb des strömenden Mediums intrinsisch gebildet ist.

Eine besondere Eigenschaft einer solchen "virtuellen" Düse besteht u.a. darin, daß sie vor dem Einlaufbereich in die Strömung allfällig induzierte Störungen weitgehend eliminiert und darüber hinaus stromab ein weitgehend ungestörtes Strömungsprofil praktisch neu aufbaut. Dabei paßt sich die Größe und Stärke des toroidalen Wirbels erfreulicherweise sogar an Größe und Stärke der einlaufenden Störung an, so daß die so geschaffene "virtuelle" Düse praktisch im Sinne einer wirkungsvollen Störungsbeseitigung selbst adaptierend ist.

Die Erfindung basiert dabei auf der überraschenden Erkenntnis, daß ein solcher stationärer, insb. auch weitgehend ortsfester, Wirbel mittels einer im Einlaufbereich des Meßsystems plazierten, in einem Randbereich des vom Medium durchströmten Lumens als definierte Störung wirkenden Strömungshindernisses - hier einer möglichst scharfen und möglichst vollständig, insb. zirkular, umlaufenden Innenkante - erzielt werden kann.

Die Wirkung der mittels des toroidalen Wirbels erzeugten "virtuellen" Düse läßt sich zudem dadurch noch weiter verbessern, daß stromaufwärts des mittels der Innenkante erzeugten Wirbels ein weiterer, gleichermaßen möglichst ortsfester Wirbel stationiert im Strömungskonditionierer wird, gegebenenfalls auch unmittelbar vor diesem. Dies kann bei dem erfindungsgemäßen Strömungskonditionierer auf konstruktiv sehr einfache Weise dadurch erreicht werden, daß eine von der Innenkante begrenzte, insb. zirkulär weitgehend gleichmäßig umlaufende, Prallfläche deutlich ausgeprägt ist, so daß sie dem anströmenden Medium in ein einer für die Wirbelbildung ausreichenden Weise als Strömungshindernis entgegen wirkt.

Durch die Ausbildung von zwei solchen toroidalen, insb. auch zueinander weitgehend konzentrisch ausgerichteten, Wirbeln können einerseits im einströmenden Medium mitschwimmende Wirbel besser aufgenommen und somit wirksamer eliminiert werden. Anderseits wird mittels zweier solcher hintereinander stehend, konzentrischen Wirbeln die effektiv wirksame Kontur der so gebildeten "virtuellen" Düse praktisch einer S-Form angenährt, die die Ausbildung eines für die nachfolgende Messung sehr gut geeigneten, gleichermaßen auch über einen weiten Anwendungsbereich gut reproduzierbaren Strömungsprofils begünstigt. Somit kann trotz allfällig gestörter Strömung im Zulaufsegment dem Meßaufnehmer über den Strömungskonditionierer Medium mit einem solchen Strömungsprofil zugeführt werden, das einer kalibrierten Situation zumindest weitgehend ähnlich ist.

Die Verwendung eines Strömungskonditionieres gemäß der vorliegenden Erfindung hat beispielsweise bei den eingangs erwähnten Vortex-Meßgeräten u.a. auch den Vorteil, daß sie trotz vergleichsweise großer Unterschiede zwischen dem Kalibern des Zulaufsegments der angeschlossenen Prozeßleitung und dem Kaliber des Meßrohr, z.B. über zwei nominelle Nennweitenstufen, auch für die Messung von vergleichsweise langsam strömenden Gasen geeignet sind.

Fig. 1        zeigt perspektivisch in einer Seitenansicht ein Meßsystem für ein in einer Prozeßleitung strömendes Medium,

Fig. 2, 3      zeigen einen für die Verwendung in einem Meßsystem gemäß Fig. 1 geeigneten, nach dem Vortex-Prinzip arbeitenden Wirbel-Meßaufnehmer, und

Fig. 4 bis 6      zeigen schematisch im Querschnitt Einzelheiten des Meßsystems gemäß Fig. 1.

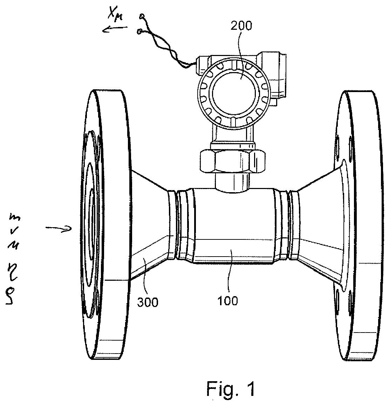

In der Fig. 1 ist ein gegebenenfalls auch modular aufgebautes, Meßsystem schematisch dargestellt, das dafür geeignet und dafür vorgesehen ist, wenigstens eine Meßgröße, insb. einen Massendurchfluß $m$ und/oder Volumendurchfluß $v$ und/oder eine Strömungsgeschwindigkeit $u$ und/oder einen andern Strömungsparameter eines in einer - hier nicht dargestellten - Prozeßleitung strömenden Mediums, beispielsweise einer Flüssigkeit, einem Gas, einem Dampf oder dergleichen, sehr robust zu messen und in wenigstens einen entsprechenden Messwert $X_M$ abzubilden. Das Meßsystem umfaßt dafür wenigstens ein In-Line-Meßgerät für strömende Medien, das mittels eines entsprechenden Meßaufnehmers 100 sowie einer mit diesem zumindest zeitweise elektrisch gekoppelte Meßelektronik des Meßsystems gebildet ist. Das In-Line-Meßgerät umfaßt einen im Betrieb vom zumessenden Medium durchströmten Meßaufnehmer 100 sowie ein Elektronik-Gehäuse 200, in dem eine mit dem Meßaufnehmer 100 elektrisch verbundene - hier nicht näher zu erläuternde - Meßelektronik untergebracht ist.

Der Meßaufnehmer 100 weist wenigstens ein in den Verlauf der, insb. als Rohrleitung ausgebildeten, Prozeßleitung eingesetztes Meßrohr auf, durch das im Betrieb des Meßsystems zumindest zeitweise das zu messenden Medium hindurch strömen gelassen wird. Das In-Line-Meßgerät ist im besonderen dafür vorgesehen, zumindest zeitweise wenigstens ein Meßsignal zu erzeugen, das von wenigstens einem physikalischen Parameter, insb. einer Strömungsgeschwindigkeit, einem Massendurchfluß $m$, einem Volumendurchfluß $v$, einer Dichte $r$ und/oder einer Viskosität $h$, des im Meßrohr befindlichen Mediums beeinflußt ist und insoweit mit der Meßgröße entsprechend korrespondiert. Zum Erzeugen des wenigstens einen Meßsignals dient hierbei eine am Meßrohr und/oder in dessen Nähe angeordnete Sensoranordnung des In-Line-Meßgeräts, die zumindest mittelbar auf Änderungen der wenigstens einen Meßgröße des Mediums in einer das wenigstens eine Meßsignal entsprechend beeinflussenden Weise reagiert.

Gemäß einer vorteilhaften Ausgestaltung der Erfindung ist die Meßelektronik ferner so ausgelegt, daß sie im Betrieb das Meßsystem mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beipielsweise einem Feldbussystem, Meß- und/oder andere Betriebsdaten, insb. auch den wenigstens einen Messwert $X_M$, austauschen kann. Für diesen vorgenannten Fall, daß das Meßsystem für eine Ankopplung an ein Feldbus- oder ein anderes Kommunikationssystem vorgesehen ist, weist die Meßgerät-Elektronik eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Auch hierfür können in beispielsweise in der industriellen Meß-und Automatisierungstechnik entsprechend etablierte Standardschnittstellen zum Einsatz kommen. Von Darüber hinaus kann auch die externe Energieversorgung an das Feldbussystem angeschlossen sein und das Meßsystem in der vorbeschriebenen Weise direkt via Feldbussystem mit Energie versorgen.

Im hier gezeigten Ausführungsbeispiel dient ein Wirbeldurchfluß-Meßgerät als In-Line-Meßgerät, das bekanntlich gut für die Messung von Gasen geeignet ist, die physikalische Meßgröße, insb. den Massendurchfluß $m$, die Dichte $r$ und/oder die Viskosität $h$, des zu messenden Mediums hochgenau zu erfassen. Allerdings können hierbei auch andere, in der Prozeßautomatisierungstechnik gleichermaßen etablierte In-Line-Meßgeräte zum Ermitteln der Meßgröße verwendet werden, wie z.B. magnetisch-induktive Durchflußmesser, Coriolis-Durchflußmeßgeräte, thermische Durchflußmesser, Differenzdruck-Durchflußmesser, Ultraschall-Durchflußmeßgeräte oder dergleichen.

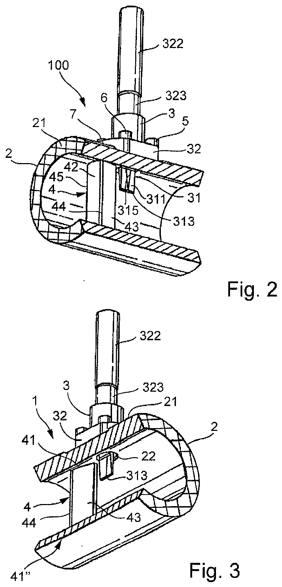

Die in den Fig. 2 und 3 gezeigten und der Übersicht dienenden perspektivischen Ansichten eines Ausführungsbeispiel für einen Wirbel-Meßaufnehmer nach dem Vortex-Prinzip zeigen, einerseits in Strömungsrichtung gesehen (Fig. 2) und andererseits gegen die Strömungsrichtung gesehen (Fig. 3), einen teilweise aufgeschnittenen Meßaufnehmer 1 eines Vortex-Durchflußmeßgeräts mit einem an einer Rohrwand 21 eines Meßrohrs 2 fixierten und durch eine Bohrung 22 hindurch ragenden Wirbelsensor 3. Dieser kann beispielsweise ein dynamisch kompensierter Wirbelsensor mit einem kapazitiven Sensorelement, wie er in der US-A 60 03 384 beschrieben ist, sein.

Entlang eines Durchmessers des Meßrohrs 2 ist in dessen Innerem ein Staukörper 4 angeordnet, der mit dem Meßrohr 2 unter Bildung einer dargestellten ersten Fixierstelle 41 und einer verdeckten zweiten Fixierstelle 41* fest verbunden ist. Das Zentrum der Bohrung 22 und das Zentrum der Fixierstelle 41 liegen auf einer Mantellinie des Meßrohrs 2.

Der Staukörper 4 hat eine Prallfläche 42, gegen die im Betrieb ein zu messendes Medium, z. B. eine Flüssigkeit, ein Gas oder ein Dampf, anströmt. Der Staukörper 4 hat ferner zwei Seitenflächen, von denen lediglich eine (vordere) Seitenfläche 43 in den Fig. 1 und 2 zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 1 zu sehen sind.

Der Staukörper 4 der Fig. 1 und 2 hat im wesentlichen die Form einer geraden Dreieck-Säule, also einer Säule mit einem dreieckigen Querschnitt. Es können jedoch auch andere übliche Formen des Staukörpers bei der Erfindung verwendet werden.

Durch das Anströmen des Mediums gegen die Prallfläche 42 bildet sich stromabwärts vom Staukörper 4 in der bekannten Weise eine Kärmän'sche Wirbelstrasse dadurch aus, dass an jeder Abrisskante abwechselnd Wirbel abreissen und vom strömenden Medium mitgenommen werden. Diese Wirbel erzeugen lokale Druckschwankungen im strömenden Medium, deren zeitbezogene Abriss-Häufigkeit, also deren sogenannte Wirbelfrequenz, ein Mass für die Strömungsgeschwindigkeit und/oder den Volumendurchfluss des Mediums ist.

Die Druckschwankungen werden mittels des Wirbelsensors 3 in ein als elektrisches Meßsignal dienendes Wirbelsignal umgeformt, das einer im Elektronik-Gehäuse untergebrachten - hier jedoch nicht gezeigten und nicht näher erläuterten - Meßelektronik zugeführt wird, die daraus beispielsweise die Strömungsgeschwindigkeit und/oder den Volumendurchfluß des strömenden Mediums entsprechend berechnet.

Der Wirbelsensor 3 ist stromabwärts vom Staukörper 4 in die Bohrung 22 der Rohrwand 21 des Meßrohrs 2 eingesetzt und dichtet die Bohrung 22 zur Mantelfläche des Meßrohrs 2 hin ab, wozu der Wirbelsensor 3 mit der Rohrwand 21 verschraubt ist. Hierzu dienen z. B. vier Schrauben, von denen in den Fig. 1 und 2 die Schrauben 5,6, 7 zu sehen sind, während in Fig. 3 zugehörige Bohrungen 50,60, 70,80 dargestellt sind.

Vom Wirbelsensor 3 ist eine in den Fig. 1 und 2 in das Innere des Meßrohrs 2 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünnerwandigen Zwischenstücks 323 in eine Verlängerung 322 aus, vgl. die erwähnte US-A 60 03 384

Die Sensorfahne 31 hat Hauptflächen, von denen in den Fig. 1 und 2 nur die Hauptfläche 311 zu sehen ist. Die Hauptflächen fluchten mit der erwähnten Mantellinie des Meßrohrs 2 und bilden eine Frontkante 313. Die Sensorfahne 31 kann auch andere geeignete Raumformen haben; so kann sie z. B. zwei parallele Hauptflächen aufweisen, die zwei parallele Frontkanten bilden.

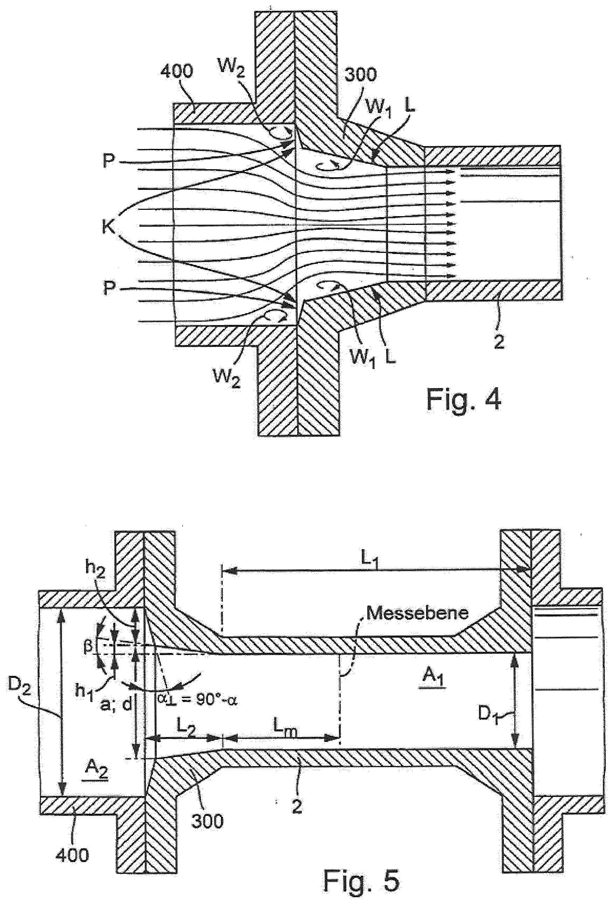

Die Sensorfahne 31 ist kürzer als der Durchmesser des Meßrohrs2 ; sie ist ferner biegesteif und weist ein Sackloch 314 auf (nur in Fig. 4 zu sehen). Damit das Sackloch 314 einen ausreichenden Durchmesser hat, treten aus den Hauptflächen Wandteile hervor, von denen in Fig. 3 der Wandteil 315 angedeutet ist. Das Sackloch 314 reicht bis in die Nähe der Frontkante 313 und hat dort einen Boden.

Zum Wirbelsensor 3 gehört ferner eine die Bohrung 22 überdeckende Membran 33 mit einer dem Medium zugewandten ersten Oberfläche 331 und einer vom Medium abgewandten zweiten Oberfläche 332, siehe die Fig. 3 und 4 An der Oberfläche 331 ist die Sensorfahne 31 fixiert und an der Oberfläche 332 ein Sensorelement 36 Bevorzugt sind die Sensorfahne 31, die Membran 33, deren ringförmiger Rand 333 und der an der Membran 33 befestigte Teil 361 des Sensorelements 36 aus einem einzigen Materialstück, z. B. Metall, insb. Edelstahl, hergestellt. Das Sensorelement 36 erzeugt das oben erwähnte Signal, dessen Frequenz proportional zum Volumendurchfluss des strömenden Mediums ist.

Beim erfindungsgemäßen Meßsystem weist das dem Führen von zu messendem Medium dienenden, insb. im wesentlichen gerade, Meßrohr einen kleineren Strömungsquerschnitt A1 auf, als ein einlaßseitig an das Meßsystem angeschlossenes Zulaufsegment 400 der Prozeßleitung. Daher umfaßt das Meßsystem ferner einen einlaßseitig des Meßrohrs angeordneten, zwischen diesem und dem Zulaufsegment der Prozeßleitung vermittelnden Strömungskonditionierer 300, der ein sich zum Meßrohr 2 hin verjüngendes, im Betrieb vom Medium durchströmtes Lumen aufweist. Ein dem Zulaufsegment der Prozeßleitung zugewandtes Einlaßende des Strömungskonditionierers weist dabei einen Strömungsquerschnitt a auf, der größer als der Strömungsquerschnitt A1 des Meßrohrs ist, während ein dem Meßrohr zugewandtes Auslaßende des Strömungskonditionierers einen Strömungsquerschnitt aufweist, der kleiner als der Strömungsquerschnitt des Einlaßendes des Strömungskonditionierers ist. Darüberhinaus weist der Strömungskonditionierer wenigstens eine stromaufwärts von dessen Auslaßende angeordnete, in das Lumen des Strömungskonditionierers hineinragende, insb. entlang einer Mantellinie des Strömungskonditionierers umlaufende und/oder zirkuläre, Innenkante K auf, die im Betrieb von darin geführtem Medium angeströmt ist.

Für den Fall, daß Medium durch den Strömungskonditionierer strömt bildet sich stromab der Innenkante K ein im wesentlichen toroidaler, zumindest im stationären Zustand weitgehend ortsfester erster Wirbel w1 aus. Die Innenkante K ist so ausgebildet und im Strömungskonditionierer angeordnete, daß sie im wesentlichen quer zu einer gedachten Längsachse des Strömungskonditionierers und/oder quer zu einer gedachten Längsachse des Meßrohrs ausgerichtet ist. Ferner ist die Innenkante, insb. zirkulär, umlaufend und insoweit in sich geschlossen ausgebildet. Im hier gezeigten Ausführungsbeispiel ist die Innenkante zudem in der, insb. unmittelbaren, Nähe des Einlaßendes des Strömungskonditionierers angeordnet. Da sich besonders gute Ergebnisse mit einer vergleichsweise scharfen Innenkante erzielt werden können, weist diese erfindungsgemäß einen Kantenradius auf, der kleiner als 2 mm, insb. kleiner 0,6 mm, ist.

Bei der hier gezeigten Konfiguration des Strömunsgkonditionieres bildet sich vor einer von der Innenkante des Strömungskonditionieres begrenzten, dem Aufstauen von daran anströmendem Medium dienenden, in einem, insb. zirkulär umlaufenden, Randbereich des Strömungskonditionierers angeordneten Prallfläche P zusätzlich zum ersten Wirbel w1 ein im wesentlichen toroidaler, zumindest im stationären Zustand gleichermaßen weitgehend ortsfester zweiter Wirbel w2 aus, und zwar in der Weise, daß die größte gedachte Trägheitshauptachse jedes der beiden Wirbel w1, w2 miteinander im wesentlichen koinzidieren.

Die Prallfläche P ist so im Strömungskonditionierer angeordnet und ausgerichtet, daß sie zumindest abschnittsweise im wesentlichen senkrecht zu einer gedachten Längsachse des Strömungskonditionierers und/oder daß sie abschnittsweise im wesentlichen senkrecht zu einer gedachten Längsachse des Meßrohrs verläuft. Da sich besonders gute Ergebnisse mit einer ausgeprägten Prallfläche erzielt werden können, weist diese nach einer vorteilhaften Ausgestaltung der Erfindung in radialer Richtung eine Höhe h2 auf, die wenigstens 1 mm beträgt. Die Prallfläche P kann beispielsweise als eine im wesentlichen planare Kreisringfläche oder auch konusförmig, sich zum Meßrohr hin verjüngend bzw. zur Prozeßleitung hin aufweiten ausgebildet sein.

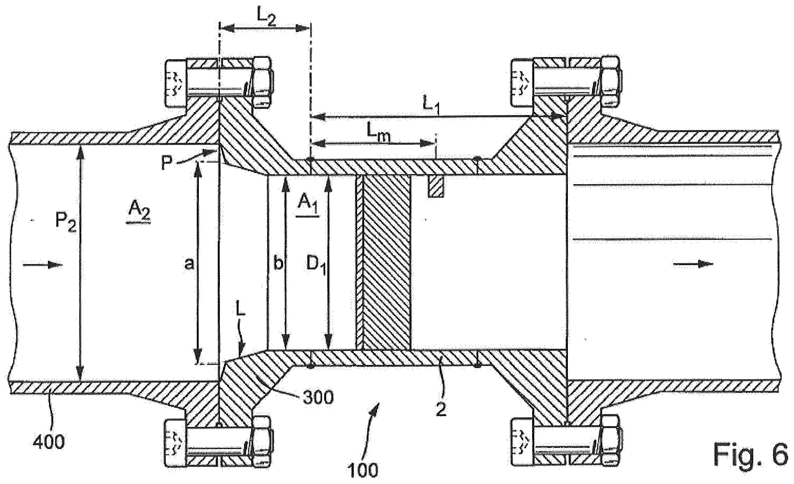

Wie aus der Fig. 4 ersichtlich, ist die wirbelerzeugende Innenkante K dadurch gebildet, daß die Prallfläche P auf eine sich in Richtung des Auslaßende des Strömungskonditionierers erstreckende, dem Führen von im Strömungskonditionierer strömendem Medium dienende Leitfläche L stößt, die insoweit ebenfalls von der Innenkante K begrenzt ist. Die sich zum Meßrohr hin verjüngende Leitfläche L kann beispielsweise, wie auch in den Fig. 4 bis 6 gezeigt, im wesentlichen konisch geformt sein, insb. so daß zumindest abschnittsweise konvex und/oder abschnittsweise konkav geformt ist

Im Meßbetrieb wird beim erfindungsgemäßen Verfahren das zu messende Medium aus dem Zulaufsegment in den Strömungskonditionierer einströmengelassen. Dabei wird es aufgrund des geringeren Strömungsquerschnitts in Richtung der gedachten Längsachse des Strömungskonditonerers des Strömungskonditionierer beschleunigt. Beim Vorbeiströmen an der Innenkante K wird zumindest der erste Wirbel w1 innerhalb des im Einlaßbereich des Strömungskonditionieres strömenden Medium gebildet, und zwar in der Weise, daß eine größte gedachte Trägheitshauptachse des Wirbels w1 mit der gedachten Längsachse des Strömungskonditionerers und/oder einer gedachten Längsachse des Meßrohrs im wesentlichen koinzidiert. Für das an Wirbel w1 vorbeiströmende Medium wirkt dieser sowohl weiter querschnittsverengend wie auch zur Leitfläche L hin vermittelnd und insoweit für das Strömungsprofil stabilsierend.

Für den hier gezeigten Fall, daß wenigstens ein weiterer im wesentlichen stationären, insb. im wesentlichen ortsfesten, toroidalen Wirbel im Einlaßbereich des Strömungskonditionieres induziert wird, ergibt sich effektiv eine zusätzliche Querschnittsverengung und insoweit auch eine erhöht Beschleunigung der Strömung.

Weitere vorteilhafte Ausgestaltungen und besondere Ausführungen, insb. auch als vorteilhaft aufgefundene Dimensionierungen für die einzelnen Elemente des erfindungsgemäßen Strömungskonditionieres sind in nachfolgenden Tabellen 1, 2 wie auch in den nachstehenden Patentansprüchen aufgeführt, worin u.a. sind:

A1 - Strömungsquerschnitt des Meßrohrs,

A2 - Strömungsquerschnitts des Zulaufsegments der Prozeßleitung,

A2/A1 - Querschnittsverhältnis des Strömungsquerschnitts A2 des Zulaufsegments der Prozeßleitung zum Strömungsquerschnitt A1 des Meßrohrs,

a - von der Innenkante K begrenzter Querschnitt des Lumens des S trömungskonditionierers,

a/A1 - Kontraktionsverhältnis des durch die Innenkante begrenzten Querschnitts a zum Strömungsquerschnitt A1 des Meßrohrs,

A2/A1-a/A1 - Differenz zwischen dem Querschnittsverhältnis A2/A1 und dem Kontraktionsverhältnis a/A1,

a/A2 - Einschnürungsverhältnis des durch die Innenkante begrenzten Querschnitts a zum Strömungsquerschnitt A2 des Zulaufsegments der Prozeßleitung,

A2/A1-a/A2 - Differenz zwischen dem Querschnittsverhältnis A2/A1 und dem Einschnürungsverhältnis a/A2,

D1 - Kaliber des Meßrohrs,

D2 - Kaliber des Zulaufsegments der einlaßseitig an das Meßsystem angeschlossen Prozeßleitung,

D2/D1 - Kaliberverhältnis des Kaliber D2 des Zulaufsegments der Prozeßleitung zum Kaliber D1 des Meßrohrs,

d - Durchmesser des durch die Innenkante K begrenzten Querschnitts des Lumens des Strömungskonditionierers,

L1 - Einbaulänge des Meßrohrs,

L2 - Einbaulänge des Strömungskonditionierers,

Lm - Abstand des Sensorelements vom Einlaßende des Meßrohrs,

$\alpha$ - Flankenwinkel eines die Prallfläche des Strömungskonditionieres bildenden Innenkonus

$$(\alpha = 90° - \alpha\perp),$$

und

$\beta$ - Flankenwinkel eines die Leitfläche des Strömungskonditionieres bildenden Innenkonus.

## Tabelle 1:

| D1 | | D2/D1 | d/D1 | D2/d | A2/A1 | a/A1 | a/A2 | (A2-a)/A1 | (a-A1)/A2 | (A2-a)/a | (a-A1)/A1 |
|---|---|---|---|---|---|---|---|---|---|---|---|
| 15 | min | 1.75 | 1.58 | 1.10 | 3.06 | 2.51 | 0.26 | 0.55 | 0.16 | 0.22 | 1.51 |
| 15 | max | 3.10 | 1.58 | 1.96 | 9.61 | 2.51 | 0.82 | 7.11 | 0.49 | 2.84 | 1.51 |
| 25 | min | 1.57 | 1.23 | 1.27 | 2.46 | 1.52 | 0.30 | 0.93 | 0.10 | 0.61 | 0.52 |
| 25 | max | 2.24 | 1.23 | 1.82 | 5.03 | 1.52 | 0.62 | 3.51 | 0.21 | 2.30 | 0.52 |
| 40 | min | 1.29 | 1.18 | 1.09 | 1.67 | 1.40 | 0.30 | 0.27 | 0.08 | 0.20 | 0.40 |
| 40 | max | 2.17 | 1.18 | 1.83 | 4.69 | 1.40 | 0.84 | 3.29 | 0.24 | 2.36 | 0.40 |
| 50 | min | 1.50 | 1.15 | 1.30 | 2.24 | 1.32 | 0.28 | 0.93 | 0.07 | 0.70 | 0.32 |
| 50 | max | 2.18 | 1.15 | 1.90 | 4.74 | 1.32 | 0.59 | 3.42 | 0.14 | 2.59 | 0.32 |
| 80 | min | 1.32 | 1.18 | 1.11 | 1.73 | 1.39 | 0.30 | 0.34 | 0.08 | 0.24 | 0.39 |
| 80 | max | 2.16 | 1.18 | 1.83 | 4.67 | 1.39 | 0.80 | 3.28 | 0.23 | 2.35 | 0.39 |
| 100 | min | 1.51 | 1.15 | 1.31 | 2.27 | 1.33 | 0.29 | 0.94 | 0.07 | 0.71 | 0.33 |
| 100 | max | 2.14 | 1.15 | 1.85 | 4.57 | 1.33 | 0.59 | 3.23 | 0.15 | 2.43 | 0.33 |
| 150 | min | 1.41 | 1.39 | 1.02 | 1.99 | 1.92 | 0.61 | 0.07 | 0.29 | 0.04 | 0.92 |
| 150 | max | 1.78 | 1.39 | 1.28 | 3.17 | 1.92 | 0.96 | 1.25 | 0.46 | 0.65 | 0.92 |
| 200 | min | 1.32 | 1.15 | 1.02 | 1.73 | 1.33 | 0.29 | 0.07 | 0.07 | 0.04 | 0.33 |
| 200 | max | 2.16 | 1.39 | 1.85 | 4.67 | 1.92 | 0.96 | 3.28 | 0.46 | 2.43 | 0.92 |
| 250 | min | 1.32 | 1.15 | 1.02 | 1.73 | 1.33 | 0.29 | 0.07 | 0.07 | 0.04 | 0.33 |
| 250 | max | 2.16 | 1.39 | 1.85 | 4.67 | 1.92 | 0.96 | 3.28 | 0.46 | 2.43 | 0.92 |
| 300 | min | 1.32 | 1.15 | 1.02 | 1.73 | 1.33 | 0.29 | 0.07 | 0.07 | 0.04 | 0.33 |
| 300 | max | 2.16 | 1.39 | 1.85 | 4.67 | 1.92 | 0.96 | 3.28 | 0.46 | 2.43 | 0.92 |
| 350 | min | 1.32 | 1.15 | 1.02 | 1.73 | 1.33 | 0.29 | 0.07 | 0.07 | 0.04 | 0.33 |
| 350 | max | 2.16 | 1.39 | 1.85 | 4.67 | 1.92 | 0.96 | 3.28 | 0.46 | 2.43 | 0.92 |
| 400 | min | 1.32 | 1.15 | 1.02 | 1.73 | 1.33 | 0.29 | 0.07 | 0.07 | 0.04 | 0.33 |
| 400 | max | 2.16 | 1.39 | 1.85 | 4.67 | 1.92 | 0.96 | 3.28 | 0.46 | 2.43 | 0.92 |
| 500 | min | 1.32 | 1.15 | 1.02 | 1.73 | 1.33 | 0.29 | 0.07 | 0.07 | 0.04 | 0.33 |
| 500 | max | 2.16 | 1.39 | 1.85 | 4.67 | 1.92 | 0.96 | 3.28 | 0.46 | 2.43 | 0.92 |
| 600 | min | 1.32 | 1.15 | 1.02 | 1.73 | 1.33 | 0.29 | 0.07 | 0.07 | 0.04 | 0.33 |
| 600 | max | 2.16 | 1.39 | 1.85 | 4.67 | 1.92 | 0.96 | 3.28 | 0.46 | 2.43 | 0.92 |

## Tabelle 2:

| D1 | | (A2/A1)-(a/A1) | (A2/A1)-(a/A2) | (D2-d)/D1 | (d-D1)/D2 | (D2-d)/d | (d-D1)//D1 | (D2/D1)-(d/D2) | L1/D2 | L1/D1 | L2/D2 | L2/D1 |
|---|---|---|---|---|---|---|---|---|---|---|---|---|
| 15 | min | 0.55 | 2.24 | 0.17 | 0.19 | 0.10 | 0.58 | 0.84 | 3.75 | 11.62 | 0.89 | 2.77 |
| 15 | max | 7.11 | 9.35 | 1.52 | 0.33 | 0.96 | 0.58 | 2.59 | 6.64 | 11.62 | 1.59 | 2.77 |
| 25 | min | 0.93 | 1.84 | 0.33 | 0.10 | 0.27 | 0.23 | 0.78 | 3.17 | 7.11 | 0.50 | 1.12 |
| 25 | max | 3.51 | 4.73 | 1.01 | 0.15 | 0.82 | 0.23 | 1.69 | 4.54 | 7.11 | 0.71 | 1.12 |
| 40 | min | 0.27 | 0.83 | 0.11 | 0.08 | 0.09 | 0.18 | 0.38 | 2.03 | 4.39 | 0.40 | 0.86 |
| 40 | max | 3.29 | 4.39 | 0.98 | 0.14 | 0.83 | 0.18 | 1.62 | 3.40 | 4.39 | 0.67 | 0.86 |
| 50 | min | 0.93 | 1.66 | 0.35 | 0.07 | 0.30 | 0.15 | 0.73 | 2.00 | 3.36 | 0.32 | 0.71 |
| 50 | max | 3.42 | 4.46 | 1.03 | 0.10 | 0.90 | 0.15 | 1.65 | 2.24 | 4.38 | 0.47 | 0.71 |
| 80 | min | 0.34 | 0.93 | 0.14 | 0.08 | 0.11 | 0.18 | 0.42 | 1.49 | 2.53 | 0.40 | 0.86 |
| 80 | max | 3.28 | 4.37 | 0.98 | 0.14 | 0.83 | 0.18 | 1.62 | 1.93 | 3.21 | 0.65 | 0.86 |
| 100 | min | 0.94 | 1.69 | 0.35 | 0.07 | 0.31 | 0.15 | 0.74 | 1.10 | 2.36 | 0.34 | 0.74 |
| 100 | max | 3.23 | 4.28 | 0.98 | 0.10 | 0.85 | 0.15 | 1.60 | 1.56 | 2.36 | 0.49 | 0.74 |
| 150 | min | 0.07 | 1.03 | 0.03 | 0.22 | 0.02 | 0.39 | 0.43 | 0.15 | 0.22 | 1.03 | 1.83 |
| 150 | max | 1.25 | 2.56 | 0.39 | 0.27 | 0.28 | 0.39 | 1.00 | 0.45 | 0.76 | 1.30 | 1.83 |
| 200 | min | 0.07 | 0.93 | 0.03 | 0.07 | 0.02 | 0.15 | 0.42 | 0.15 | 0.22 | 0.34 | 0.74 |
| 200 | max | 3.28 | 4.37 | 0.98 | 0.27 | 0.85 | 0.39 | 1.62 | 1.93 | 3.21 | 1.30 | 1.83 |
| 250 | min | 0.07 | 0.93 | 0.03 | 0.07 | 0.02 | 0.15 | 0.42 | 0.15 | 0.22 | 0.34 | 0.74 |
| 250 | max | 3.28 | 4.37 | 0.98 | 0.27 | 0.85 | 0.39 | 1.62 | 1.93 | 3.21 | 1.30 | 1.83 |
| 300 | min | 0.07 | 0.93 | 0.03 | 0.07 | 0.02 | 0.15 | 0.42 | 0.15 | 0.22 | 0.34 | 0.74 |
| 300 | max | 3.28 | 4.37 | 0.98 | 0.27 | 0.85 | 0.39 | 1.62 | 1.93 | 3.21 | 1.30 | 1.83 |
| 350 | min | 0.07 | 0.93 | 0.03 | 0.07 | 0.02 | 0.15 | 0.42 | 0.15 | 0.22 | 0.34 | 0.74 |
| 350 | max | 3.28 | 4.37 | 0.98 | 0.27 | 0.85 | 0.39 | 1.62 | 1.93 | 3.21 | 1.30 | 1.83 |
| 400 | min | 0.07 | 0.93 | 0.03 | 0.07 | 0.02 | 0.15 | 0.42 | 0.15 | 0.22 | 0.34 | 0.74 |
| 400 | max | 3.28 | 4.37 | 0.98 | 0.27 | 0.85 | 0.39 | 1.62 | 1.93 | 3.21 | 1.30 | 1.83 |
| 500 | min | 0.07 | 0.93 | 0.03 | 0.07 | 0.02 | 0.15 | 0.42 | 0.15 | 0.22 | 0.34 | 0.74 |
| 500 | max | 3.28 | 4.37 | 0.98 | 0.27 | 0.85 | 0.39 | 1.62 | 1.93 | 3.21 | 1.30 | 1.83 |
| 600 | min | 0.07 | 0.93 | 0.03 | 0.07 | 0.02 | 0.15 | 0.42 | 0.15 | 0.22 | 0.34 | 0.74 |
| 600 | max | 3.28 | 4.37 | 0.98 | 0.27 | 0.85 | 0.39 | 1.62 | 1.93 | 3.21 | 1.30 | 1.83 |

## Patentansprüche

1. Prozeßleitung, insb. Rohrleitung, mit einem in deren Verlauf eingesetzten Meßsystem zum Erfassen wenigstens einer Meßgröße, insb. eines Massedurchflusses, eines Volumendurchflusses, einer Strömungsgeschwindigkeit, einer Dichte, einer Viskosität, eines Drucks, einer Temperatur und/oder dergleichen, eines in der Prozeßleitung strömenden Mediums, und mit einem einlaßseitig an das Meßsystem angeschlossenen Zulaufsegment (400),

- wobei das Meßsystem umfaßt:

-- einen Meßaufnehmer (100)

--- mit einem dem Führen von zu messendem Medium dienenden, insb. im wesentlichen geraden, Meßrohr (2), das einen kleineren Strömungsquerschnitt (A1) aufweist, als das einlaßseitig an das Meßsystem angeschlossenes Zulaufsegment der Prozeßleitung, und

--- mit einer Sensoranordnung,

---- die wenigstens ein primär auf die zu erfassende Meßgröße, insb. auch Änderungen derselben, reagierendes Sensorelement aufweist, und

---- die mittels des wenigstens einen Sensorelements wenigstens ein von der Meßgröße beeinflußtes Meßsignal liefert,

-- eine mit dem Meßaufnehmer (100) kommunizierende Meßelektronik, die unter Verwendung des wenigstens einen Meßsignals zumindest zeitweise wenigstens einen die Meßgröße momentan repräsentierenden Meßwert, insb. einen Massendurchfluß-Meßwert, Volumendurchfluß-Meßwert, einen Dichte-Meßwert, einen Viskositäts-Meßwert, einen Druck-Meßwert, einen Temperatur-Meßwert, erzeugt, sowie

-- einen einlaßseitig des Meßrohrs angeordneten, zwischen diesem und dem Zulaufsegment der Prozeßleitung vermittelnden Strömungskonditionierer (300), der ein sich zum Meßrohr (2) hin verjüngendes, im Betrieb vom Medium durchströmtes Lumen aufweist;

- wobei ein dem Zulaufsegment (400) der Prozeßleitung zugewandtes Einlaßende des Strömungskonditionierers (300) einen Strömungsquerschnitt (a) aufweist, der größer als der Strömungsquerschnitt (A1) des Meßrohrs (2) ist, und ein dem Meßrohr (2) zugewandtes Auslaßende des Strömungskonditionierers (300) einen Strömungsquerschnitt (b) aufweist, der kleiner als der Strömungsquerschnitt des Einlaßendes des Strömungskonditionierers (300) ist, und

- wobei der Strömungskonditionierer (300) wenigstens eine stromaufwärts von dessen Auslaßende angeordnete, in das Lumen des Strömungskonditionierers (300) hineinragende Innenkante (K) aufweist, die im Betrieb von darin geführtem Medium angeströmt ist;

- wobei die wenigstens eine in das Lumen des Strömungskonditionierers hineinragende Innenkante (K), insb. zirkulär, umlaufend und insoweit in sich geschlossen ausgebildet ist und einen Kantenradius aufweist, der kleiner als 2 mm, insb. kleiner 0,6 mm, ist;

- wobei die wenigstens eine in das Lumen des Strömungskonditionierers (300) hineinragende Innenkante (K) eine dem Aufstauen von daran anströmendem Medium dienende, in einem, insb. zirkulär umlaufenden, Randbereich des Strömungskonditionierers (300) angeordnete Prallfläche (P) des Strömungskonditionieres (300) sowie eine dem Führen von im Strömungskonditionierer (300) strömendem Medium dienende, sich in Richtung des Auslaßendes des Strömungskonditionierers (300) erstreckende Leitfläche (L) des Strömungskonditionieres (300) begrenzt;

- wobei die Prallfläche (P) und die Innenkante (K) zumindest anteilig durch einen einlassseitig im Strömungskonditionierer (300) eingeformten, insb. sich zu dessen Einlassende hin erstreckenden, ersten Innenkonus gebildet sind, welcher erster Innenkonus einen Flankenwinkel ($\alpha$) aufweist, derart, daß die Prallfläche (P) sich zum Einlaßende des Strömungskonditionieres (300) hin aufweitend ausgebildet ist;

- wobei die Leitfläche (L) und die Innenkante (K) zumindest anteilig durch einen einlaßseitig im Strömungskonditionierer (300) eingeformten, insb. sich zu dessen Auslaßende hin erstreckenden, zweiten Innenkonus gebildet sind, welcher zweiter Innenkonus einen Flankenwinkel ($\beta$) aufweist, der größer als 2°, insb. größer als 4°, und kleiner als 45°, insb. kleiner als 10°, ist;

- wobei der Flankenwinkel ($\alpha$) des ersten Innenkonus größer als der Flankenwinkel ($\beta$) des zweiten Innenkonus ist;

- und wobei das wenigstens eine, insb. im Betrieb in das Medium eintauchende, Sensorelement in einem Abstand (Lm) vom Einlaßende des Meßrohrs (2) entfernt im und/oder, insb. unmittelbar, am Meßrohr angeordnet ist, derart, daß ein Verhältnis des Abstands (Lm) zu einem Kaliber (D1) des Meßrohrs (2) größer als eins gehalten ist.

2. Prozeßleitung nach einem der vorherigen Ansprüche, wobei ein Querschnittsverhältnis (A2/A1) des Strömungsquerschnitts (A2) des Zulaufsegments (400) der Prozeßleitung zum Strömungsquerschnitt (A1) des Meßrohrs größer als 1.5 und/oder kleiner als 10, insb. in einem Bereich zwischen 1.66 und 9.6, gehalten ist.

3. Prozeßleitung nach dem vorherigen Anspruch,

- wobei ein von der wenigstens einen in das Lumen des Strömungskonditionierers (300) hineinragenden Innenkante begrenzter Querschnitt (a) des Lumens des Strömungskonditionierers (300) kleiner ist als der Strömungsquerschnitt (A2) des Zulaufsegments (400) der Prozeßleitung;
- und wobei ein Einschnürungsverhältnis (a/A2) des durch die Innenkante begrenzten Querschnitts (a) zum Strömungsquerschnitt (A2) des Zulaufsegments (400) der Prozeßleitung kleiner als 0.9 und/oder größer als 0.1, insb. in einem Bereich zwischen 0.25 und 0.85, gehalten ist.

4. Prozeßleitung nach dem vorherigen Anspruch, wobei eine Differenz (A2/A1-a/A2) zwischen dem Querschnittsverhältnis (A2/A1) und dem Einschnürungsverhältnis (a/A2) größer als 0.5 und/oder kleiner als 10, insb. größer als 0.83 und kleiner als 9.5, gehalten ist.

5. Prozeßleitung nach einem der Ansprüche 2 bis 4, wobei ein Kontraktionsverhältnis (a/A1) des durch die Innenkante begrenzten Querschnitts (a) zum Strömungsquerschnitt (A1) des Meßrohrs (2) größer als 1.2 und/oder kleiner als 5, insb. in einem Bereich zwischen 1.3 und 3, gehalten ist.

6. Prozeßleitung nach dem vorherigen Anspruch, wobei eine Differenz (A2/A1-a/A1) zwischen dem Querschnittsverhältnis (A2/A1) und dem Kontraktionsverhältnis (a/A1) größer als 0.2 und/oder kleiner als 10, insb. größer als 0.25 und kleiner als 8, gehalten ist.

7. Prozeßleitung nach einem der vorherigen Ansprüche, wobei das Meßrohr ein kleineres Kaliber (D1) aufweist, als ein einlaßseitig an das Meßsystem angeschlossenes Zulaufsegment (400) der Prozeßleitung.

8. Prozeßleitung nach dem vorherigen Anspruch,

- wobei das dem Zulaufsegment (400) der Prozeßleitung zugewandte Einlaßende des Strömungskonditionierers ein Kaliber aufweist, das größer als ein Kaliber (D1) des Meßrohrs (2) ist, und das dem Meßrohr (2) zugewandte Auslaßende des Strömungskonditionierers (300) ein Kaliber aufweist, das kleiner als das Kaliber des Einlaßendes des Strömungskonditionierers (300) ist; und/oder
- wobei die wenigstens eine in das Lumen des Strömungskonditionierers (300) hineinragende Innenkante (K) dadurch gebildet ist, daß der Innendurchmesser des Einlaßendes (d) des Strömungskonditionierers (300) kleiner gehalten ist, als das Kaliber (D2) des Zulaufsegments (400) der Prozeßleitung; und/oder
- wobei ein von der wenigstens einen in das Lumen des Strömungskonditionierers (300) hineinragenden Innenkante (K) begrenzter Querschnitt des Lumens des Strömungskonditionierers (300) einen Durchmesser (d) aufweist, der kleiner ist als das Kaliber (D2) des Zulaufsegments (400) der Prozeßleitung; und/oder
- wobei ein Kaliberverhältnis (D2/D1) des Kaliber (D2) des Zulaufsegments (400) der Prozeßleitung zum Kaliber (D1) des Meßrohrs (2) größer als 1.1 und/oder kleiner als 5 gehalten ist, insb. in einem Bereich zwischen 1.2 und 3.1.

9. Prozeßleitung nach einem der Ansprüche 7 bis 8, wobei das Meßrohr (2) eine Einbaulänge (L1) aufweist, die größer als eine Einbaulänge (L2) des Strömungskonditionierers (300) ist, so daß ein Einbaulängenverhältnis (L2/L1) der Einbaulänge (L2) des Strömungskonditionierers (300) zur Einbaulänge (L1) des Meßrohrs (2) kleiner als eins gehalten ist.

10. Prozeßleitung nach dem vorherigen Anspruch, wobei ein Kaliberverhältnis (D2/D1) des Kalibers (D2) des Zulaufsegments (400) der Prozeßleitung zum Kaliber (D1) des Meßrohrs (2) mindestens 10% des Einbaulängenverhältnisse (L2/L1) der Einbaulänge (L2) des Strömungskonditionierers (300) zur Einbaulänge (L1) des Meßrohrs (2) entspricht.

11. Prozeßleitung nach einem der vorherigen Ansprüche,

- wobei die wenigstens eine in das Lumen des Strömungskonditionierers (300) hineinragende Innenkante (K) so ausgebildet und im Strömungskonditionierer (300) angeordnete ist, daß sie im wesentlichen quer zu einer gedachten Längsachse des Strömungskonditionierers (300) und/oder quer zu einer gedachten Längsachse des Meßrohrs (2) ausgerichtet ist; und/oder
- wobei der Strömunsgkonditionierer (300) zumindest in einem Einlaßbereich im wesentlichen kreiszylindrisch geformt ist; und/oder
- wobei das Meßrohr (2) zumindest in einem Einlaßbereich im wesentlichen kreiszylindrisch geformt ist; und/oder
- wobei der Strömunsgkonditionierer (300) zumindest in einem Auslaßbereich im wesentlichen kreiszylindrisch geformt ist; und/oder

- wobei das, insb. kreiszylindrische, Meßrohr (2) im wesentlichen gerade ist; und/oder
- wobei es sich bei dem Meßaufnehmer (100) um einen Wirbel-Durchflußaufnehmer, insb. einen Wirbelstraßen-Durchflußaufnehmer handelt; und/oder
- wobei der Meßaufnehmer (100) wenigstens einen im Meßrohr (2) angeordneten Staukörper (4) umfaßt und wobei das wenigstens eine, insb. zumindest anteilig in das Meßrohr (2) hineinragende, Sensorelement der Sensoranordnung stromabwärts des wenigstens einen Staukörpers (4) angeordnet ist.

12. Prozeßleitung nach einem der vorherigen Ansprüche,

- wobei die Prallfläche (P) in radialer Richtung eine Höhe aufweist, die wenigstens 1 mm beträgt; und/oder
- wobei die Prallfläche (P) als eine Kreisringfläche ausgebildet ist; und/oder
- wobei der erste Innenkonus einen Flankenwinkel (a) aufweist, der größer als 45°, insb. größer als 60°, und/oder der kleiner als 90°, insb. kleiner als 88°, ist.

## Claims

1. Process pipe, particularly a conduit, with a measuring system introduced in the course of said process pipe, wherein said measuring system is designed to measure at least one measured variable, particularly a mass flow, a volume flow, a flow velocity, a density, a viscosity, a pressure, a temperature and/or similar, of a medium flowing through the process pipe, and with an inlet segment (400) connected to the measuring system on the inlet side,

- wherein said measuring system comprises:

-- a sensor (100)
--- with a measuring tube (2), particularly an essentially straight measuring tube, serving to conduct the medium to be measured, said measuring tube having a smaller flow cross-section (A1) than the inlet segment of the process pipe connected to the measuring system on the inlet side, and
--- with a sensor arrangement,
--- which has at least one sensor element which reacts primarily to the measured variable to be measured, particularly also to changes of same, and
--- which, by means of the at least one sensor element, delivers at least one measuring signal that is influenced by the measured variable,
-- measuring electronics that communicate with the sensor (100), wherein, using the at least one measuring signal, said electronics at least intermittently generate at least one measured value that currently represents the measured variable, particularly a mass flow measured value, a volume flow measured value, a density measured value, a viscosity measured value, a pressure measured value, a temperature measured value, and
-- a flow conditioner (300) which is arranged on the inlet side of the measuring tube, between the measuring tube and the inlet segment of the process pipe, said conditioner having an interior channel through which medium flows during operation and which narrows in the direction of the measuring tube (2);

- wherein an inlet end of the flow conditioner (300), which faces towards the inlet segment (400) of the process pipe, has a flow cross-section (a), which is greater than the flow cross-section (A1) of the measuring tube (2), and an outlet end of the flow conditioner (300), which faces towards the measuring tube (2), has a flow cross-section (b) which is smaller than the flow cross-section of the inlet end of the flow conditioner (300), and
- wherein the flow conditioner (300) has at least one interior edge (K), which is arranged upstream from the outlet end and projects into the interior channel of the flow conditioner (300), wherein, during operation, medium in said flow conditioner flows to said interior edge;
- wherein the at least one interior edge (K), which projects into the interior channel of the flow conditioner, is formed particularly in a circular and circumferential manner, and is therefore closed, and has an edge radius that is less than 2 mm, particularly less than 0.6 mm;
- wherein the at least one interior edge (K), which projects into the interior channel of the flow conditioner (300), limits the impact surface (P) of the flow conditioner (300), said impact surface being arranged in a marginal area, particularly circular and peripheral, of the flow conditioner (300), and serving to accumulate medium that flows by said interior edge, and limits a guide surface (L) of the flow conditioner (300), which extends in the direction of the outlet end of the flow conditioner (300) and serves to conduct medium flowing through the flow conditioner (300);

- wherein the impact surface (P) and the interior edge (K) are formed at least in part by a first interior cone which is shaped into the flow conditioner (300) on the inlet side, and particularly extends to the inlet end, wherein said first interior cone has a flank angle ($\alpha$), such that the impact surface (P) is formed in a manner that it widens towards the inlet end of the flow conditioner (300) ;
- wherein the guide surface (L) and the interior edge (K) are formed at least in part by a second interior cone, which is shaped into the flow conditioner (300) on the inlet side, and particularly extends to the outlet end, wherein said second interior cone has a flank angle ($\beta$) which is greater than 2°, particularly greater than 4°, and less than 45°, particularly less than 10°;
- wherein the flank angle ($\alpha$) of the first interior cone is greater than the flank angle ($\beta$) of the second interior cone;
- and wherein the at least one sensor element, which is particularly immersed in the medium during operation, is arranged in and/or, particularly directly, on the measuring tube at a distance (Lm) from the inlet end of the measuring tube (2) in such a way that a ratio of the distance (Lm) to a caliber (D1) of the measuring tube (2) is greater than one.

2. Process pipe as claimed in one of the previous claims, wherein a cross-section ratio (A2/A1) of the flow cross-section (A2) of the inlet segment (400) of the process pipe to the flow cross-section (A1) of the measuring tube is greater than 1.5 and/or less than 10, and is particularly maintained in a range between 1.66 and 9.6.

3. Process pipe as claimed in the previous claim,

- wherein a cross-section (a) of the interior channel of the flow conditioner (300), which is limited by the at least one interior edge projecting into the interior channel of the flow conditioner (300), is smaller than the flow cross-section (A2) of the inlet segment (400) of the process pipe;
- and wherein a restriction ratio (a/A2) of the cross-section (a), which is limited by the interior edge, to the flow cross-section (A2) of the inlet segment (400) of the process pipe is less than 0.9 and/or greater than 0.1, and is particularly maintained in a range between 0.25 and 0.85.

4. Process pipe as claimed in the previous claim, wherein a difference (A2/A1-a/A2) between the cross-section ratio (A2/A1) and the restriction ratio (a/A2) is greater than 0.5 and/or less than 10, and is particularly maintained in a range greater than 0.83 and less than 9.5.

5. Process pipe as claimed in one of the Claims 2 to 4, wherein a contraction ratio (a/A1) of the cross-section (a), which is limited by the interior edge, to the flow cross-section (A1) of the measuring tube (2) is greater than 1.2 and/or less than 5, and is particularly maintained in a range between 1.3 and 3.

6. Process pipe as claimed in the previous claim, wherein a difference (A2/A1-a/A1) between the cross-section ratio (A2/A1) and the contraction ratio (a/A1) is greater than 0.2 and/or less than 10, and is particularly maintained in a range greater than 0.25 and less than 8.

7. Process pipe as claimed in one of the previous claims, wherein the measuring tube has a smaller caliber (D1) than a process pipe inlet segment (400) which is connected to the measuring system on the inlet side.

8. Process pipe as claimed in the previous claim,

- wherein the inlet end of the flow conditioner (300), which faces towards the inlet segment (400) of the process pipe, has a caliber that is greater than a caliber (D1) of the measuring tube (2), and wherein the outlet end of the flow conditioner (300), which faces towards the measuring tube (2), has a caliber that is smaller than the caliber of the inlet end of the flow conditioner (300); and/or
- wherein the at least one interior edge (K) projecting into the interior channel of the flow conditioner (300) is designed in such a way that the inner diameter of the inlet end (d) of the flow conditioner (300) is kept smaller than the caliber (D2) of the inlet segment (400) of the process pipe; and/or
- wherein a cross-section of the interior channel of the flow conditioner (300) which is limited by the at least one interior edge (K) projecting into the interior channel of the flow conditioner (300) has a diameter (d) which is smaller than the caliber (D2) of the inlet segment (400) of the process pipe; and/or
- wherein a caliber ratio (D2/D1) of the caliber (D2) of the inlet segment (400) of the process pipe to the caliber (D1) of the measuring tube (2) is kept greater than 1.1 and/or less than 5, particularly in a range between 1.2 and 3.1.

9. Process pipe as claimed in one of the Claims 7 to 8, wherein the measuring tube (2) has an installation length (L1) which is greater than an installation length (L2) of the flow conditioner (300), such that an installation length ratio (L2/L1) of the installation length (L2) of the flow conditioner (300) to the installation length (L1) of the measuring tube (2) is kept to be less than one.

10. Process pipe as claimed in the previous claim, wherein a caliber ratio (D2/D1) of the caliber (D2) of the inlet segment (400) of the process pipe to the caliber (D1) of the measuring tube (2) corresponds to at least 10% of the installation length ratio (L2/L1) of the installation length (L2) of the flow conditioner (300) to the installation length (L1) of the measuring tube (2).

11. Process pipe as claimed in one of the previous claims,

 - wherein the at least one interior edge (K) projecting into the interior channel of the flow conditioner (300) is designed and arranged in the flow conditioner (300) in such a way that it is aligned essentially perpendicular to an imaginary longitudinal axis of the flow conditioner (300) and/or perpendicular to an imaginary longitudinal axis of the measuring tube (2); and/or
 - wherein the flow conditioner (300) has an essentially circular cylindrical form at least in an inlet area; and/or
 - wherein the measuring tube (2) has an essentially circular cylindrical form at least in an inlet area; and/or
 - wherein the flow conditioner (300) has an essentially circular cylindrical form at least in an outlet area; and/or
 - wherein the measuring tube (2), particularly with a circular cylindrical form, is essentially straight; and/or
 - wherein the sensor (100) is a vortex flow sensor, particularly a Karman vortex street flow sensor; and/or
 - wherein the sensor (100) comprises at least one bluff body (4) arranged in the measuring tube (2), and wherein the at least one sensor element of the sensor arrangement, particularly projecting into the measuring tube (2) at least in part, is arranged downstream from the at least one bluff body (4).

12. Process pipe as claimed in one of the previous claims,

 - wherein, in the radial direction, the impact surface (P) has a height that is at least 1 mm; and/or
 - wherein the impact surface (P) is designed as an annulus surface; and/or
 - wherein the first interior cone has a flank angle ($\alpha$), which is greater than 45 °, particularly greater than 60 °, and/or is less than 90 °, particularly less than 88 °C.

**Revendications**

1. Conduite de process, notamment une tuyauterie, avec un système de mesure inséré dans son tracé, lequel système est destiné à mesurer au moins une grandeur de mesure, notamment un débit massique, un débit volumique, une vitesse d'écoulement, une masse volumique, une viscosité, une pression, une température, etc., d'un produit s'écoulant dans une conduite de process, et avec un segment d'alimentation (400) raccordé côté entrée au système de mesure,

 - le système de mesure comprenant :

  -- un capteur (100)
  --- avec un tube de mesure (2) servant au guidage du produit à mesurer, notamment pour l'essentiel droit, qui présente une section d'écoulement (A1) inférieure au segment d'alimentation de la conduite de process, raccordée côté entrée au système de mesure, et
  --- avec un dispositif capteur,
  --- qui comprend au minimum un élément capteur réagissant de façon primaire à une grandeur à mesurer, notamment aux changements de celle-ci, et
  --- qui délivre, au moyen de l'au moins un élément capteur, un signal de mesure influencé par la grandeur à mesurer,
  -- une électronique de mesure communiquant avec le capteur (100), laquelle électronique génère, en utilisant l'au moins un signal de mesure, au minimum temporairement une valeur mesurée représentant momentanément la grandeur à mesurer, notamment une valeur mesurée de débit massique, une valeur mesurée de débit volumique, une valeur mesurée de masse volumique, une valeur mesurée de viscosité, une valeur mesurée de pression, une valeur mesurée de température, ainsi que

-- un conditionneur d'écoulement (300) disposé côté entrée du tube de mesure, entre celui-ci et le segment d'alimentation de la conduite de process, lequel conditionneur comporte un canal intérieur parcouru, en fonctionnement, par le produit et qui se rétrécit en direction du tube de mesure (2) ;

- une extrémité d'entrée du conditionneur d'écoulement (300), qui fait face au segment d'alimentation (400) de la conduite de process, présentant une section d'écoulement (a) supérieure à la section d'écoulement (A1) du tube de mesure (2), et une extrémité de sortie du conditionneur d'écoulement (300), qui fait face au tube de mesure (2), présentant une section d'écoulement (b) inférieure à la section d'écoulement de l'extrémité d'entrée du conditionneur d'écoulement (300), et
- le conditionneur d'écoulement (300) présentant au minimum un bord intérieur (K), disposé en amont de l'extrémité de sortie du conditionneur et pénétrant dans le canal intérieur du conditionneur d'écoulement (300), lequel bord est balayé, en fonctionnement, par le produit qui y est guidé ;
- l'au moins un bord intérieur (K), qui pénètre dans le canal intérieur du conditionneur d'écoulement (300), étant formé, notamment de façon circulaire et périphérique, fermé sur lui-même, et présentant un rayon inférieur à 2 mm, notamment inférieur à 0,6 mm ;
- l'au moins un bord intérieur (K), qui pénètre dans le canal intérieur du conditionneur d'écoulement (300), servant à accumuler le produit, qui s'écoule au niveau de ce bord, dans une surface d'impact (P) du conditionneur d'écoulement (300), disposée dans une zone marginale, notamment circulaire et périphérique, du conditionneur d'écoulement (300), et limitant une surface de guidage du conditionneur d'écoulement (300), qui s'étend en direction de l'extrémité de sortie du conditionneur d'écoulement (300) et qui sert à guider le produit s'écoulant dans le conditionneur d'écoulement (300) ;
- la surface d'impact (P) et le bord intérieur (K) étant formés au moins partiellement, côté entrée du conditionneur d'écoulement (300), par un deuxième cône intérieur, s'étendant notamment jusqu'à son extrémité d'entrée, lequel premier cône intérieur présente un angle de flanc ($\sigma$), si bien que la surface d'impact (P) est formée de manière à s'élargir en direction de l'extrémité d'entrée du conditionneur d'écoulement (300) ;
- la surface d'impact (P) et le bord intérieur (K) étant formés au moins partiellement, côté entrée du conditionneur d'écoulement (300), par un premier cône intérieur, s'étendant notamment jusqu'à son extrémité de sortie, lequel deuxième cône intérieur présente un angle de flanc ($\beta$) supérieur à 2°, notamment supérieur à 4°, et inférieur à 45°, notamment inférieur à 10° ;
- l'angle de flanc ($\sigma$) du premier cône intérieur étant supérieur à l'angle de flanc ($\beta$) du deuxième cône intérieur ;
- et l'au moins un élément capteur, notamment immergé en fonctionnement dans le produit, étant disposé, à une distance (Lm) de l'extrémité d'entrée du tube de mesure (2), dans et/ou, notamment directement, sur le tube de mesure, de telle sorte qu'un rapport entre la distance (Lm) et un calibre (D1) du tube de mesure (2) est maintenu supérieur à un.

2. Conduite de process selon l'une des revendications précédentes, pour laquelle un rapport des sections (A2/A1) entre la section d'écoulement (A2) du segment d'alimentation (400) de la conduite de process et la section d'écoulement (A1) du tube de mesure est supérieur à 1,5 et/ou inférieur à 10, notamment maintenu dans une plage comprise entre 1,66 et 9,6.

3. Conduite de process selon la revendication précédente,

- pour laquelle une section (a) limitée par l'au moins un bord intérieur du canal intérieur du conditionneur d'écoulement (300), s'étendant dans le canal intérieur du conditionneur d'écoulement (300), est inférieure à la section d'écoulement (A2) du segment d'alimentation (400) de la conduite de process ;
- et pour lequel un rapport de striction (a/A2) entre la section (a) limitée par le bord intérieur et la section d'écoulement (A2) du segment d'alimentation (400) de la conduite de process est inférieur à 0,9 et/ou supérieur à 0,1, notamment maintenu dans une plage comprise entre 0,25 et 0,85.

4. Conduite de process selon la revendication précédente, pour laquelle une différence (A2/A1-a/A2) entre le rapport des sections (A2/A1) et le rapport de striction (a/A2) est supérieure à 0,5 et/ou inférieure à 10, notamment maintenue supérieure à 0,83 et inférieure à 9,5.

5. Conduite de process selon l'une des revendications 2 à 4, pour laquelle un rapport de contraction (a/A1) entre la section (a) limitée par le bord intérieur et la section d'écoulement (A1) du tube de mesure (2) est supérieur à 1,2 et/ou inférieur à 5, notamment maintenu dans une plage comprise entre 1,3 et 3.

6. Conduite de process selon la revendication précédente, pour laquelle une différence (A2/A1 -a/A1) entre le rapport des sections (A2/A1) et le rapport de contraction (a/A1) est supérieure à 0,2 et/ou inférieure à 10, notamment maintenue dans une plage comprise entre 0,25 et 8.

7. Conduite de process selon l'une des revendications précédentes, pour laquelle le tube de mesure présente un calibre (D1) inférieur à un segment d'alimentation (400) raccordé côté entrée au système de mesure.

8. Conduite de process selon la revendication précédente,

- pour laquelle l'extrémité d'entrée du conditionneur d'écoulement (300), qui fait face au segment d'alimentation (400) de la conduite de process, présente un calibre supérieur à un calibre (D1) du tube de mesure (2), et pour laquelle l'extrémité de sortie du conditionneur d'écoulement (300), faisant face au tube de mesure (2), présente un calibre inférieur au calibre de l'extrémité d'entrée du conditionneur d'écoulement (300) ; et/ou
- pour laquelle l'au moins un bord intérieur (K) pénétrant dans le canal intérieur du conditionneur d'écoulement (300) est formé de telle sorte que le diamètre intérieur de l'extrémité d'entrée (d) du conditionneur d'écoulement (300) est maintenu plus petit que le calibre (D2) du segment d'alimentation (400) de la conduite de process ; et/ou
- pour laquelle une section, limitée par l'au moins un bord intérieur (K) pénétrant dans le canal intérieur du conditionneur d'écoulement (300), du canal intérieur du conditionneur d'écoulement (300) présente un diamètre (d) inférieur au calibre (D2) du segment d'alimentation (400) de la conduite de process ; et/ou
- pour laquelle un rapport des sections (D2/D1) entre le calibre (D2) du segment d'alimentation (400) et le calibre (D1) du tube de mesure (2) est maintenu supérieur à 1,1 et/ou inférieur à 5, notamment dans une plage comprise entre 1,2 et 3,1.

9. Conduite de process selon l'une des revendications 7 à 8, pour laquelle le tube de mesure (2) présente une longueur de montage (L1) supérieure à la longueur de montage (L2) du conditionneur d'écoulement (300), de telle sorte qu'un rapport des longueurs (L2/L1) entre la longueur de montage (L2) du conditionneur d'écoulement (300) et la longueur de montage (L1) du tube de mesure (2) est maintenu inférieur à un.

10. Conduite de process selon la revendication précédente, pour laquelle un rapport des sections (D2/D1) entre le calibre (D2) du segment d'alimentation (400) de la conduite de process et le calibre (D1) du tube de mesure (2) correspond à au moins 10 % du rapport des longueurs de montage (L2/L1) entre la longueur de montage (L2) du conditionneur d'écoulement (300) et la longueur de montage (L1) du tube de mesure (2).

11. Conduite de process selon l'une des revendications précédentes,

- pour laquelle l'au moins un bord intérieur (K) pénétrant dans le canal intérieur du conditionneur d'écoulement (300) est conçu et disposé dans le conditionneur d'écoulement (300) de telle sorte qu'il soit pour l'essentiel aligné perpendiculairement à un axe longitudinal imaginaire du conditionneur d'écoulement (300) et/ou perpendiculairement à un axe longitudinal imaginaire du tube de mesure (2) ; et/ou
- pour laquelle le conditionneur d'écoulement (300) est formé au minimum dans une zone d'entrée pour l'essentiel de façon cylindrique circulaire ; et/ou
- pour laquelle le tube de mesure (2) est formé au minimum dans une zone d'entrée pour l'essentiel de façon cylindrique circulaire ; et/ou
- pour laquelle le conditionneur d'écoulement (300) est formé au minimum dans une zone de sortie pour l'essentiel de façon cylindrique circulaire ; et/ou
- pour laquelle le tube de mesure (2), notamment de forme cylindrique circulaire, est pour l'essentiel droit ; et/ou
- pour laquelle il s'agit, concernant le capteur (100), d'un capteur de débit vortex, notamment d'un capteur de débit vortex de Karman ; et/ou
- pour laquelle le capteur (100) comprend au minimum un corps de retenue (4) disposé dans le tube de mesure (2), et pour laquelle l'au moins un élément capteur du dispositif capteur, notamment pénétrant au moins partiellement dans le tube de mesure (2), est disposé en aval de l'au moins un corps de retenue (4).

12. Conduite de process selon l'une des revendications précédentes,

- pour laquelle la surface d'impact (P) présente en direction axiale une hauteur, qui s'élève à au moins 1 mm ; et/ou
- pour laquelle la surface d'impact (P) est conçue sous la forme d'une surface d'anneau de cercle ; et/ou
- pour laquelle le premier cône intérieur présente un angle de flanc ($\sigma$), qui est supérieur à 45°, notamment supérieur à 60°, et/ou qui est inférieur à 90°, notamment inférieur à 88 °C.

Fig. 1

Fig. 2

Fig. 3

Fig. 4

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1039269 A
- US 6031740 A
- US 5540103 A
- US 5351554 A
- US 4563904 A
- US 6397683 B
- US 6330831 B
- US 6293156 B
- US 6189389 B
- US 5531124 A
- US 5463905 A
- US 5131279 A
- US 4787252 A
- EP 984248 A
- GB 2142725 A
- US 3686946 A
- US 4308754 A
- US 4420983 A
- US 4468971 A
- US 4524610 A
- US 4716770 A
- US 4768384 A
- US 5052229 A
- US 5052230 A
- US 5231884 A
- US 5359881 A
- US 5458005 A
- US 5469748 A
- US 5687100 A
- US 5796011 A
- US 5808209 A
- US 6003384 A
- US 6053054 A
- US 6006609 A
- US 6352000 B
- US 6513393 B
- US 6644132 B
- US 6651513 B
- US 6880410 B
- US 6910387 B
- US 20050092101 A
- WO 8802476 A
- WO 8802853 A
- WO 9516897 A
- WO 0036379 A
- WO 0014485 A
- WO 0102816 A
- WO 02086426 A
- US 6397683 A
- EP 903651 A
- EP 1008836 A
- US 6352000 A
- US A A